# EUROPÄISCHE PATENTANMELDUNG

(11) **EP 3 609 148 A1**
(43) Veröffentlichungstag der Anmeldung: **12.02.2020**
(21) Anmeldenummer: 18187536.0
(22) Anmeldetag: 06.08.2018
(51) Int. Cl.: H04L 29/06, H04L 29/08, H04W 4/38, H04W 4/70

(54) **VERFAHREN UND NETZWERKKNOTEN ZUR VERARBEITUNG VON MESSDATEN**

(71) Anmelder: Siemens Aktiengesellschaft, 80333 München (DE)
(72) Erfinder: Nicklis, Bernd, 76829 Landau (DE)

(57) **Zusammenfassung**

Gemäß einer Ausführungsform wird ein Knoten eines Netzwerkes offenbart. Der Knoten weist dabei eine Messeinrichtung auf, welche zum Erfassen von Messdaten, welche mindestens eine physikalische Größe abbilden, eingerichtet ist. Der Knoten weist ferner eine Empfangseinrichtung auf, welche zum Empfangen einer Blockchain eingerichtet ist. Der Knoten weist ferner eine Erstellungseinrichtung auf, welche zum Erstellen eines Datenblocks für die Blockchain basierend auf den Messdaten und der Blockchain eingerichtet ist. Der Knoten ein weist ferner eine Ausgabeeinrichtung auf, welche zum getrennten Ausgeben (i) des Datenblocks zur Validierung durch einen weiteren Knoten und (ii) der Messdaten eingerichtet ist. Gemäß weiteren Ausführungsformen werden ein Verfahren zum Verarbeiten von Messdaten sowie ein Verfahren zum Überwachen der Verarbeitung eines Industrieprodukts durch eine Vielzahl von Messknoten eines Netzwerks und mittels einer Blockchain offenbart.

## Beschreibung

### TECHNISCHES GEBIET

Gemäß einer Ausführungsform wird ein Knoten eines Netzwerkes offenbart. Gemäß einer weiteren Ausführungsform wird ein Verfahren zum Verarbeiten von Messdaten offenbart. Gemäß einer weiteren Ausführungsform wird ein Verfahren zum Überwachen der Verarbeitung eines Industrieprodukts durch eine Vielzahl von Messknoten eines Netzwerks und mittels einer Blockchain offenbart.

### HINTERGRUND

Der in einer sich globalisierenden Welt zunehmende Handel von Rohstoffen wie beispielsweise Erdöl und Erdgas geht mit einem Länder und Kontinente übergreifenden Ausbau von Systemen, die eine Beförderung dieser Rohstoffe ermöglichen, einher. Dabei wird von den beteiligten Handelspartnern eine Übereignung derartiger Rohstoffe mittels des Transportsystems veranlasst, wofür der Rohstoffgeber üblicherweise eine monetäre Kompensation von dem Rohstoffnehmer erhalten soll.

Das Ausmaß einer derartigen monetären Kompensation kann von verschiedenen Faktoren abhängen, welche beispielsweise eine Menge, einen Güte oder einen Lieferzeitpunkt der Rohstoffe umfassen können. Derartige monetäre Vergütungen in Abhängigkeit dieser Faktoren können in einer vertraglichen Übereinstimmung hinterlegt sein, sodass es zur vertrauensvollen Umsetzung der Handelsbeziehung für beide Vertragsparteien erstrebenswert ist, unverfälschte Informationen über die erfolgte Rohstofflieferung während des gesamten Lieferzeitraums zu erhalten.

Insbesondere bei permanenten Lieferbeziehungen im Energiebereich, beispielsweise beim Transport von Erdöl und Erdgas, müssen über einen längeren Zeitraum große Datenmengen erfasst werden, deren fälschungssicheres Bereitstellen für die betreffenden Handelspartner gegenwärtig nur mit einem immensen Speicherplatzbedarf realisierbar ist. Demzufolge besteht ein Bedarf an Maßnahmen, auf deren Basis Messdaten bezüglich derartiger Rohstofftransporte einem Handelspartner als unverfälscht angezeigt werden können.

Für eine verbesserte Manipulationssicherung ist gegenwärtig ferner die Technologie von Blockchain) bzw. "Distributed Ledgers" aktuell eine intensiv diskutierte Technologie, die insbesondere als verteiltes Datenbanksystem realisiert sein kann. Neben Anwendungen für dezentrale Bezahlsysteme (z. B. Bitcoin) werden in der Finanzindustrie neue Anwendungsmöglichkeiten entwickelt. Insbesondere können Transaktionen zwischen Firmen dadurch ohne Vermittler bzw. Clearing-Stelle manipulationsgeschützt realisiert werden. Dies ermöglicht neue Geschäftsmodelle ohne einen vertrauenswürdigen Vermittler, es reduziert die Transaktionskosten, und es können flexibel neue digitale Dienste angeboten werden, ohne eine dafür speziell eingerichtete Infrastruktur und Vertrauensbeziehungen einrichten zu müssen. Ein durch eine Blockchain geschützter Transaktionsdatensatz (oder kurz Transaktion) umfasst z. B. Programmcode, der auch als sogenannter "Smart Contract" bezeichnet werden kann.

Aus dem Stand der Technik sind das Dokument US 8,531,247 B2, das Dokument US 8,892,616 B2, das Dokument US 8,300,811 B2, das Dokument US 9,147,088 B2, das Dokument US 9584311 B2, das Dokument EP 2976707 B1, das Dokument EP 2 605 445 B1, das Dokument EP 2 870 565 A1, das Dokument EP 2 891 102 A1, das Dokument WO 2017137256 A1, das Dokument EP 2870565 B1, EP 2891266 B1, das Dokument EP 2961091 A1, das Dokument EP 2961093 A1, das Dokument EP 3028140 B1, das Dokument EP 2930610 B1, das Dokument EP 2940620 B1, das Dokument EP 2899714 A1, das Dokument EP 2981926 A0, das Dokument EP 3125492 B1, das Dokument EP17195125, das Dokument EP17211075, das Dokument EP18178316, das Dokument EP18156084, das Dokument EP18151345, das Dokument EP18167702, das Dokument EP18153594, das Dokument EP18162050, das Dokument EP18178498, das Dokument EP18152117, das Dokument EP18150133, das Dokument EP18169145, das Dokument EP17210647, das Dokument EP18150146, das Dokument EP18167486, das Dokument EP18168670, das Dokument EP18162049, das Dokument EP17203819, das Dokument EP18157168, das Dokument EP18169421, das Dokument EP17210253, das Dokument EP17205224, das Dokument EP18169269, das Dokument EP18169254, das Dokument EP17210288, das Dokument EP18153025, das Dokument EP17200614, das Dokument EP18156308, das Dokument EP17201758, das Dokument EP18156511, das Dokument EP18159485, das Dokument EP17203573, das Dokument EP 17175275, das Dokument EP17186826, das Dokument WO 2018069271 A1, das Dokument PCT/EP2017/082508, das Dokument EP17179823, das Dokument WO 2017050348 A1, das Dokument WO 2018068965 A1 und das Dokument US 8 843 761 B2 bekannt.

### KURZZUSAMMENFASSUNG DER ERFINDUNG

Eine Aufgabe der Erfindung ist es daher eine Vorrichtung bereitzustellen, welche die Unverfälschtheit von Messdaten mit möglichst einfachen technischen Mitteln sicherstellen kann.

Eine weitere Aufgabe der Erfindung ist es daher ein Verfahren bereitzustellen, welches unverfälschte Messdaten mit möglichst einfachen technischen Mittelns sicherstellt.

Eine weitere Aufgabe der Erfindung ist es daher ein Verfahren bereitzustellen, welches ein unverfälschtes Verarbeiten eines Industrieprodukts sicherstellt.

Diese Aufgaben werden gemäß entsprechender Ausführungsformen durch Knoten eines Netzwerkes gemäß Anspruch 1, ein Verfahren zum Verarbeiten von Messdaten gemäß Anspruch 13 sowie ein Verfahren zum Überwachen der Verarbeitung eines Industrieprodukts durch eine Vielzahl von Messknoten eines Netzwerks und mittels einer Blockchain gemäß Anspruch 15 gelöst. Weitere diese Ausführungsformen betreffende Ausgestaltungen werden in den abhängigen Ansprüchen beansprucht.

Gemäß einer Ausführungsform wird ein Knoten eines Netzwerkes offenbart. Der Knoten weist dabei eine Messeinrichtung auf, welche zum Erfassen von Messdaten, welche mindestens eine physikalische Größe abbilden, eingerichtet ist. Der Knoten weist ferner eine Empfangseinrichtung auf, welche zum Empfangen einer Blockchain eingerichtet ist. Der Knoten weist ferner eine Erstellungseinrichtung auf, welche zum Erstellen eines Datenblocks für die Blockchain basierend auf den Messdaten und der Blockchain eingerichtet ist. Der Knoten weist ferner eine Ausgabeeinrichtung auf, welche zum getrennten Ausgeben (i) des Datenblocks zur Validierung durch einen weiteren Knoten und (ii) der Messdaten eingerichtet ist.

Basierend auf einem derartigen Ansatz wird es ermöglicht, an einem Knoten des Netzwerkes die Messdaten, welche mindestens eine physikalische Größe abbilden, zu erfassen und auf eine Weise zu verarbeiten, welche es Teilnehmern des Netzwerkes ermöglicht, je nach Applikation auf unterschiedliche, auf den Messdaten basierende Informationen Zugriff zu erhalten. Hierfür sieht der Konten des Netzwerkes eine separate Ausgabe eines Datenblocks, welcher auf den Messdaten basiert, und der Messdaten selbst vor. Dabei ermöglicht die Erstellung des Datenblocks basierend auf den Messdaten, dass hierin Informationen aus den Messdaten in einer besonders effizient hinterlegten Form aufgenommen werden können, wobei der Informationsgehalt dieses Datenblocks gegenüber den vollständigen Messdaten verhältnismäßig hoch ist, jedoch ein signifikant reduziertes Datenvolumen aufweisen kann. Beispielsweise können in dem Datenblock nur besonders bedeutsame Informationen der Messdaten aufgenommen werden oder die Messdaten können zumindest teilweise in einer komprimierten Form in dem Datenblock aufgenommen werden. Durch die Ausgestaltung des Datenblocks für eine Validierung durch einen anderen Knoten des Netzwerkes wird ferner die Aufnahme des Datenblocks in die bestehende Blockchain ermöglicht. Aufgrund der besonderen Verschlüsselungstechnik der Blockchain können hierdurch die im Datenblock aufgenommenen Informationen, welche sich auf die Messdaten beziehen, besonders manipulationssicher in der verteilten Datenbank des Netzwerkes hinterlegt werden, sodass diese jederzeit in unverfälschter Form für Teilnehmer des Netzwerkes zugänglich sind.

Gemäß einer weiteren Ausführungsform wird ein Verfahren zum Verarbeiten von Messdaten offenbart. Das Verfahren weist dabei die Schritte a) Erfassen der Messdaten, welche mindestens eine physikalische Größe abbilden, b) Empfangen einer Blockchain, c) Erstellen eines Datenblocks für die Blockchain basierend auf den Messdaten und der Blockchain, und d) Getrenntes Ausgeben (i) des Datenblocks zur Validierung und (ii) der Messdaten auf.

Basierend auf einem derartigen Ansatz wird es ermöglicht, auf der Basis der oben genannten erfindungsgemäßen Vorrichtung ein möglichst einfaches und effizientes Verfahren auszuführen.

Gemäß einer weiteren Ausführungsform wird ein Verfahren zum Überwachen der Verarbeitung eines Industrieprodukts durch eine Vielzahl von Messknoten eines Netzwerks und mittels einer Blockchain offenbart. Das Verfahren weist dabei an jedem der Messknoten der Vielzahl von Messknoten ein Erfassen von entsprechenden Messdaten, welche die Verarbeitung des Industrieprodukts mit einer entsprechenden Messmodalität abbilden, auf. Das Verfahren weist ferner an jedem der Messknoten der Vielzahl von Messknoten ein Erstellen eines entsprechenden Blocks für die Blockchain basierend auf der Blockchain und den entsprechenden Messdaten auf. Das Verfahren weist ferner ein Validieren des durch einen ersten Messknoten der Vielzahl von Messknoten erstellen Blocks durch einen zweiten Messknoten der Vielzahl von Messknoten und/oder durch eine zentrale Einheit des Netzwerks auf.

Basierend auf einem derartigen Ansatz kann eine durchgängige Überprüfung und Begleitung bei der Erstellung eines Industrieprodukts manipulationssicher und mit technisch möglichst einfachen Mitteln bewerkstelligt werden.

Unter einem Knoten im Sinne der Erfindung ist ein Austauschareal innerhalb eines Netzwerkes zu verstehen, welches dazu eingerichtet ist, Daten innerhalb des Netzwerkes auszutauschen. Der Knoten kann dabei dazu eingerichtet sein, Funktionen innerhalb des Netzwerkes auszuüben. Das Netzwerk kann zum Bereitstellten einer verteilten Datenbank, beispielsweise einer Blockchain basierten Datenbank, eingerichtet sein. Der Knoten kann dabei zur Aktualisierung einer Blockchain der Blockchain basierten Datenbank beitragen, beispielsweise durch Erstellen und/oder Ausgeben eines Datenblocks oder durch Validieren eines durch einen anderen Knoten des Netzwerkes erstellten Datenblocks. Unter einem Knoten und dergleichen können im Zusammenhang mit der Erfindung beispielsweise ferner auch Geräte (z. B. Feldgeräte, Mobiltelefone), Rechner, Smart-Phones, Clients oder Teilnehmer verstanden werden, die Operationen (mit) dem verteilten Datenbanksystem (z. B. eine Blockkette) durchführen. Solche Knoten können beispielsweise Transaktionen eines verteilten Datenbanksystems bzw. deren Datenblöcke ausführen oder neue Datenblöcke mit neuen Transaktionen in das verteilte Datenbanksystem mittels neuer Datenblöcke einfügen bzw. verketten. Insbesondere kann dieses Validieren und/oder Verketten durch einen vertrauenswürdigen Knoten (z. B. einem Mining Node) oder ausschließlich durch vertrauenswürdige Knoten erfolgen. Bei einem vertrauenswürdigen Knoten handelt es sich beispielsweise um einen Knoten, der über zusätzliche Sicherheitsmaßnahmen verfügt (z. B. Firewalls, Zugangsbeschränkungen zum Knoten oder ähnliches), um eine Manipulation des Knotens zu verhindern. Alternativ oder zusätzlich kann beispielsweise ein vertrauenswürdiger Knoten beim Verketten eines neuen Datenblocks mit dem verteilten Datenbanksystem, eine Knotenprüfsumme (z. B. eine digitale Signatur oder ein Zertifikat) in dem neuen Datenblock speichern. Damit kann insbesondere ein Nachweis bereitgestellt werden, der angibt, dass der entsprechende Datenblock von einem bestimmten Knoten eingefügt wurde bzw. seine Herkunft angibt. Bei den Geräten (z. B. dem entsprechenden Gerät) handelt es sich beispielsweise um Geräte eines technischen Systems und/oder industriellen Anlage und/oder eines Automatisierungsnetzes und/oder einer Fertigungsanlage, die insbesondere auch ein Knoten des verteilten Datenbanksystems sind. Dabei können die Geräte beispielsweise Feldgeräte sein oder Geräte im Internet der Dinge sein, die insbesondere auch ein Knoten des verteilten Datenbanksystems sind. Knoten können beispielsweise auch zumindest einen Prozessor umfassen, um z. B. ihre computerimplementierte Funktionalität auszuführen.

Unter Messdaten im Sinne der Erfindung sind Informationen eines Systems zu verstehen, welche auf Basis einer Messung erlangt werden können. Die Messdaten können sich auf Eigenschaften einer transportablen Substanz und/oder eines Industrieprodukts beziehen. Eine derartige transportable Substanz kann beispielsweise mindestens eines von Erdöl, Erdgas, Wasser, Abwasser und Chemikalien umfassen. Die Eigenschaften der transportablen Substanz können sich ferner auf deren Güte und/oder deren Menge beziehen und können ferner mit entsprechenden Zeitspannen oder Zeitpunkten, zu welchen die Messdaten erhoben wurden, korreliert werden. Die Eigenschaften der transportablen Substanz können ferner Informationen betreffend ihre Zusammensetzung, ihren Brennwert, und ihre Bestandteile umfassen.

Unter einer Blockchain im Sinne der Erfindung ist eine kontinuierlich erweiterbare Kette an Datenblöcken zu verstehen, deren Verkettung auf der Basis eines kryptographischen Verkettungsverfahrens erfolgt. Dabei kann eine Verkettung zweiter Datenblöcke unter Verwendung einer Prüfsumme erfolgen, welche für die Daten aller vorhergehenden Datenblöcke der Blockchain charakteristisch ist. Dabei kann die Prüfsumme auch als Hash-Wert bezeichnet werden und die kryptographische Verkettung kann auf Basis eines sogenannten Proof-of-Stake-Verfahrens oder eines sogenannten Proof-of-Work-Verfahrens erfolgen.

Unter einem Datenblock im Sinne der Erfindung kann im Zusammenhang mit der Erfindung beispielsweise ein Datenblock einer Blockchain verstanden werden, die insbesondere als Datenstruktur realisiert ist und vorzugsweise jeweils eine oder mehrere der Transaktionen umfasst. Bei einer Implementierung kann beispielsweise ein Datenblock ein Block der Blockchain sein. Ein Datenblock kann beispielsweise Angaben zur Größe (Datengröße in Byte) des Datenblocks, einen Datenblock-Header, einen Transaktionszähler und eine oder mehrere Transaktionen umfassen. Der Datenblock-Header kann beispielsweise eine Version, eine Verkettungsprüfsumme, eine Datenblockprüfsumme, einen Zeitstempel, einen Proof-of-Work Nachweis und eine Nonce (Einmalwert, Zufallswert oder Zähler, der für den Proof-of-Work Nachweis verwendet wird) umfassen. Bei einem Datenblock kann es sich beispielsweise auch nur um einen bestimmten Speicherbereich oder Adressbereich der Gesamtdaten handeln, die in Blockchain basierten Datenbank gespeichert sind. Mindestens eine Transaktion des Datenblocks kann dabei auf den Messdaten basieren. Beispielweise kann die mindestens eine Transaktion einer Prüfsumme der Messdaten umfassen.

Unter einer Validierung im Sinne der Erfindung ist Befugnis zur Verkettung eines Datenblocks mit einer bestehenden Blockchain zu verstehen. Dabei kann diese Befugnis auf einer Prüfung eines Datenblocks durch einen Knoten eines Netzwerkes basieren, wobei die Prüfung auf der Ermittlung einer Prüfsumme auf der Basis der in der Blockchain inkludierten Daten basieren kann.

Unter einer Messmodalität im Sinne der Erfindung ist eine Art und Weise zu verstehen, mittels welcher Messdaten von einem zu untersuchenden System erlangt werden.

Gemäß einer Ausführungsform des Knotens umfasst der Datenblock eine Prüfsumme der Messdaten.

Auf diese Weise kann in dem Datenblock, welcher für die Hinterlegung in der Blockchain ausgestaltet ist, ein eindeutiges Abbild der Messdaten erstellt werden, mittels welcher die Unverfälschtheit der Messdaten indiziert werden kann. Über die Validierung der Prüfsumme durch einen anderen Knoten des Netzwerks kann somit die Echtheit der Messdaten überprüft und über die Blockchain mit den Knoten des Netzwerkes geteilt werden, sodass ein Vertragspartner einfach in Kenntnis dieser Information gelangen kann. Die Prüfsumme weist gegenüber den Ursprungsdaten ferner ein deutlich reduziertes Datenvolumen aus, sodass die erforderlichen Speicherressourcen der über die Zeit fortgeschriebenen Blockchain überschaubar bleiben.

Gemäß einer Ausführungsform des Knotens umfasst der Datenblock nicht die Messdaten.

Auf diese Weise kann einerseits das Datenvolumen der für die Blockchain bereitgestellten Datenblocks reduziert werden. Andererseits kann auf diese Weise die Verteilung sensibler Daten von Vertragspartnern, welche durch die Messdaten ermittelt worden sind, vor der Veröffentlichung in der Blockchain basierten Datenbank geschützt werden.

Gemäß einer Ausführungsform des Knotens ist die Messeinrichtung zum zeitsequentiellen Erfassen der Messdaten und zum Aggregieren der Messdaten im Zusammenhang mit dem Erstellen des Datenblocks eingerichtet.

Auf diese Weise können Messdaten von einem System kontinuierlich ermittelt werden. Dies kann insbesondere bei Systemen von Bedeutung sein, bei welchen eine transportable Substanz dauerhaft zwischen Vertragspartnern durch ein Transportsystem übereignet wird und überwacht werden soll, beispielsweise bei Erdgas-, Erdöl- oder Wasserlieferungen. Die Aggregation dieser dauerhaft ermittelten Messdaten kann auf diese Weise größentechnisch bedarfsgerecht in einem entsprechenden Datenblock zusammengefasst und an einen weiteren Knoten zur Validierung für die Blockchain ausgeben werden. Dadurch kann eine Veröffentlichung der auf den Messdaten basierenden Datenblöcke flexibel an die jeweiligen Bedürfnisse der Netzwerkteilnehmer angepasst werden.

Gemäß einer Ausführungsform weist der Knoten ferner eine Statusabfrageeinrichtung auf, welche zum Bestimmen von Statusdaten, die einen Betriebsparameter der Messeinrichtung betreffen, eingerichtet ist, wobei der durch die Erstellungseinrichtung erstellte Datenblock ferner auf den Statusdaten basiert.

Auf diese Weise können Zustände und Abläufe, welche die Messeinrichtung betreffen, in dem Datenblock indiziert werden und an den weiteren Knoten zur Validierung für die Blockchain ausgegeben werden. Derartige Zustände und Abläufe der Messeinrichtung können beispielsweise das Vorliegen und den Zeitraum von Wartungsarbeiten, Inspektionen, manuelle Beeinträchtigungen und Manipulationen durch einen Unberechtigten indizieren und somit zusätzliche Informationen über die Echtheit der Messdaten umfassen. Dadurch kann die Manipulationssicherheit der Messdaten weiter verbessert werden.

Gemäß einer Ausführungsform des Knotens ist die Ausgabeeinrichtung dazu eingerichtet, den Datenblock zur Validierung an einen zentralen Knoten des Netzwerkes auszugeben.

Auf diese Weise kann die Validierung und Aufnahme von auf Messdaten basierenden Datenblöcken durch eine zentrale Autorität gesteuert werden. Hierdurch wird eine Priorisierung der Prüfung und der Aufnahme von Datenblöcken in die Blockchain aus einer Vielzahl verschiedener Datenblöcke diverser Knoten durch die zentrale Autorität entsprechend den Bedürfnissen der Netzwerkteilnehmer gesteuert. Dies ermöglicht eine verbesserte Regelung der durch die Blockchain im Netzwerk verteilten beziehungsweise veröffentlichten Informationen, wodurch sich verlässlichere Abläufe in der regelmäßigen Aktualisierung der Blockchain ergeben.

Gemäß einer Ausführungsform des Knotens ist die Ausgabeeinrichtung dazu eingerichtet, den Datenblock an einen Speicher auszugeben, wobei der Speicher ein lokaler Speicher oder ein Cloudspeicher ist.

Auf diese Weise wird es dem Knoten ermöglicht, den erstellten Datenblock zu einem beliebigen Zeitpunkt an den anderen Knoten zur Validierung für die Blockchain auszugeben. Hierdurch wird eine verbesserte Flexibilität zur Datenausgabe an die Blockzeit ermöglicht, welche den Bedürfnissen der Netzwerkteilnehmer verbessert gerecht werden kann.

Gemäß einer Ausführungsform des Knotens weist dieser ferner eine Zwischenspeichereinrichtung auf, wobei letztere dazu eingerichtet ist den Datenblock vorübergehend zu speichern, bis das Übertragen durch die Ausgabeeinrichtung an den Speicher ermöglicht werden kann.

Auf diese Weise kann die Übertragung des Datenblocks zu dem Speicher auch in Fällen sichergestellt werden, in welche die Datenübertragung mit dem Speicher unterbrochen sein kann. Hierdurch wird eine verbesserte Sicherung des Datenblocks erzielt.

Gemäß einer Ausführungsform des Knotens weist die Blockchain eine Vielzahl von hinterlegten Blöcken auf, wobei die hinterlegten Blöcke indikativ für weitere Messdaten von weiteren Messeinrichtungen von weiteren Knoten des Netzwerks sind.

Da der erstellbare Datenblock auf der Blockchain basiert, wird es hierdurch ermöglicht, bei der Erstellung des Datenblocks Messdaten weiterer Datenblöcke zu berücksichtigen. Dies ermöglicht einen verbesserten Abgleich und eine verbesserte Überprüfung der Blockchain für den Fall, dass Manipulationen an Messdaten und/oder einer Messeinrichtung eines Knotens vorgenommen worden sind. Hierdurch wird ein verbesserter Sicherheitsstandard bei der Überprüfung des Vorliegens von Manipulationen im Netzwerk ermöglicht.

Gemäß einer Ausführungsform des Knotens ist die Ausgabeeinrichtung dazu eingerichtet, den Datenblock und die Messdaten an unterschiedliche Knoten innerhalb des Netzwerks zu übertragen.

Auf diese Weise wird es ermöglicht, die Messdaten und den auf den Messdaten basierenden Datenblock mit einem unterschiedlichen Teilnehmerkreis innerhalb eines oder mehrerer Netzwerke zu teilen. Beispielsweise kann auf diese Weise das Vorliegen unverfälschter Messdaten über das Verknüpfen des Datenblocks mit der Blockchain mit allen Teilnehmern eines Blockchainnetzwerkes geteilt werden, wogegen die möglicherweise deutlich sensibleren Messdaten, welche eine Lieferung durch einen Vertragspartner betreffen können, lediglich zwischen den Vertragspartnern ausgetauscht werden. Hierdurch kann ein verbesserter Schutz sensibler Messdaten gegenüber Unberechtigten erzielt werden.

Gemäß einer Ausführungsform des Knotens ist die Empfangseinrichtung ferner dazu eingerichtet, einen weiteren Datenblock von einem weiteren Knoten des Netzwerks zur Verarbeitung von weiteren Messdaten einer weiteren Messeinrichtung zu empfangen, und der Knoten umfasst ferner ein Validierungsmodul, das eingerichtet ist, den weiteren Datenblock basierend auf einem Vergleich einer Prüfsumme des weiteren Datenblocks mit der Blockchain zu validieren und in Abhängigkeit von einem Validierungsergebnis den weiteren Datenblock mit der Blockchain zu verketten.

Auf diese Weise kann der die Messeinrichtung umfassende Knoten selbst weitere Datenblöcke, welche auf weiteren Messdaten basieren, für die Verkettung in der Blockchain validieren. Hierdurch wird eine dezentrale und somit zeiteffiziente Aktualisierung der Blockchain ermöglicht.

Gemäß einer Ausführungsform des Knotens beziehen sich die Messdaten auf eine Menge und/oder eine Güte einer in einem Transportsystem transportablen Substanz.

Auf diese Weise können Merkmale, welche die Qualität und/oder die Quantität der transportablen Substanz kennzeichnend sind und somit für die Preisbildung zwischen den Vertragspartnern oder das Erfüllen wesentlicher Vertragsbestandteile - beispielsweise das Vorliegen einer transportable Substanz in hinreichend guter Qualität - wesentlich sind, ermittelt und für eine Verteilung zwischen den Vertragspartnern beziehungsweise den Netzwerkteilnehmern weiter verarbeitet beziehungsweise unmittelbar ausgegeben werden.

Gemäß einer Ausführungsform des Verfahrens zum Verarbeiten von Messdaten wird dieses mit einem Knoten gemäß einer der hierein dargestellten Ausführungsformen ausgeführt.

Auf diese Weise werden die erfassten Messdaten mit technisch besonders einfachen Mitteln und auf eine besonders effiziente Weise verarbeitet.

Gemäß einer Ausführungsform des Verfahrens zum Überwachen der Verarbeitung bilden unterschiedliche Messknoten der Vielzahl von Messknoten die Verarbeitung des Industrieprodukts mit unterschiedlichen Messmodalitäten und/oder zu unterschiedlichen Zeiten und/oder an unterschiedlichen Positionen ab.

Auf diese Weise kann das Überwachen der Verarbeitung des Industrieprodukts auf besonders flexible Weise ausgeführt werden.

Die im Vorstehenden beschriebenen, die jeweilige Ausführungsform betreffenden Aspekte und die dazugehörigen, zur Weiterbildung des Knotens offenbarten Maßnahmen gelten auch für die Ausführungsformen und die dazugehörigen Weiterbildungen des zugehörigen Verfahrens zum Verarbeiten von Messdaten sowie des Verfahrens zum Überwachen der Verarbeitung eines Industrieprodukts.

Unter einer Prüfsumme im Sinne der Erfindung, beispielsweise eine Datenblockprüfsumme, eine Datenprüfsumme, eine Knotenprüfsumme, eine Transaktionsprüfsumme, eine Verkettungsprüfsumme oder dergleichen, kann im Zusammenhang mit der Erfindung beispielsweise eine kryptographische Prüfsumme oder kryptographischer Hash bzw. Hashwert verstanden werden, die insbesondere mittels einer kryptographischen Hashfunktion über einen Datensatz und/oder Daten und/oder eine oder mehrere der Transaktionen und/oder einem Teilbereich eines Datenblocks (z. B. der Block-Header eines Blocks einer Blockkette oder Datenblock-Header eines Datenblocks des verteilten Datenbanksystems oder nur einem Teil der Transaktionen eines Datenblocks) gebildet oder berechnet werden. Bei einer Prüfsumme kann es sich insbesondere um eine Prüfsumme/n oder Hashwert/e eines Hash-Baumes (z. B. Merkle Baum, Patricia-Baum) handeln. Weiterhin kann darunter insbesondere auch eine digitale Signatur oder ein kryptographischer Nachrichtenauthentisierungscode verstanden werden. Mittels der Prüfsummen kann beispielsweise auf unterschiedlichen Ebenen des Datenbanksystems ein kryptographischer Schutz / Manipulationsschutz für die Transaktionen und die darin gespeicherten Datensätze realisiert werden. Ist beispielsweise eine hohe Sicherheit gefordert, werden beispielsweise die Prüfsummen auf Transaktionsebene erzeugt und überprüft. Ist eine weniger hohe Sicherheit gefordert, werden beispielsweise die Prüfsummen auf Blockebene (z. B. über den ganzen Datenblock oder nur über einen Teil des Datenblocks und/oder einen Teil der Transkationen) erzeugt und überprüft. Eine zu ermittelnde Prüfsumme kann als Rohdaten Messdaten, welche zumindest eine physikalische Größe abbilden, heranziehen.

Unter Statusdaten im Sinne der Erfindung sind Informationen zu verstehen, welche vergangene und/oder gegenwärtige und/oder zukünftige Geschehnisse eines Knoten eines Netzwerkes sowie den Zustand eines Knotens eines Netzwerkes betreffend können. Derartige Statusdaten des Knotens können Einwirkungen auf den Knoten, beispielsweise Wartungsarbeiten, Manipulationen und Inspektionen am Knoten indizieren.

Unter einem zentralen Knoten im Sinne der Erfindung ist ein Knoten eines Netzwerkes zu verstehen, welche zum Datenaustausch mit mindestens zwei weiteren Knoten eingerichtet ist. Dabei kann der zentrale Knoten zum Empfangen und Validieren von einer Vielzahl an Datenblöcken für die Blockchain eingerichtet sein. Der zentrale Knoten kann ferner dazu eingerichtet sein mindesten zwei weitere Knoten des Netzwerkes über eine Aktualisierung der Blockchain zu informieren. Der zentrale Knoten kann als zentrale Autorität des Netzwerkes ausgebildet sein.

Unter einem Speicher und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter umfassen, aufweisen oder dergleichen, insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur/Datensatz (die z. B. wiederum in einer Speichereinheit gespeichert ist) verstanden werden.

Unter bereitstellen, insbesondere in Bezug auf Daten und/oder Informationen, kann im Zusammenhang mit der Erfindung beispielsweise ein rechnergestütztes Bereitstellen verstanden werden. Das Bereitstellen erfolgt beispielsweise über eine Schnittstelle (z. B. eine Datenbankschnittstelle, eine Netzwerkschnittstelle, eine Schnittstelle zu einer Speichereinheit). Über diese Schnittstelle können beispielsweise beim Bereitstellen entsprechende Daten und/oder Informationen übermittelt und/oder gesendet und/oder abgerufen und/oder empfangen werden. Unter bereitstellen kann im Zusammenhang mit der Erfindung beispielsweise auch ein Laden oder ein Speichern, beispielsweise einer Transaktion mit entsprechenden Daten verstanden werden. Dies kann beispielsweise auf oder von einem Speichermodul erfolgen. Unter bereitstellen kann beispielsweise auch ein Übertragen (oder ein Senden oder ein Übermitteln) von entsprechenden Daten von einem Knoten zu einem anderen Knoten der Blockkette oder des verteilten Datenbanksystems (bzw. deren Infrastruktur) verstanden werden.

Unter Verketten der/von Datenblöcken der Blockchain oder dergleichen kann im Zusammenhang mit der Erfindung beispielsweise verstanden werden, dass Datenblöcke jeweils eine Information (z. B. Verkettungsprüfsumme) umfassen, die auf einen anderen Datenblock oder mehrere andere Datenblöcke des verteilten Datenbanksystems verweisen beziehungsweise diese referenzieren.

Unter einer Transaktion bzw. kann im Zusammenhang mit der Erfindung beispielsweise ein Smart-Contract, eine Datenstruktur oder ein Transaktionsdatensatz verstanden werden, der insbesondere jeweils eine der Transaktionen oder mehrere Transkationen umfasst. Unter Transaktion kann im Zusammenhang mit der Erfindung beispielsweise auch die Daten einer Transaktion eines Datenblocks einer Blockchain verstanden werden. Eine Transaktion kann insbesondere einen Programmcode umfassen, der beispielsweise einen Smart Contract realisiert. Beispielsweise können im Zusammenhang mit der Erfindung unter Transaktion auch eine Steuertransaktion und/oder Bestätigungstransaktion verstanden werden. Alternativ kann eine Transaktion beispielsweise eine Datenstruktur sein, die Daten speichert (z. B. die Steuerbefehle und/oder Vertragsdaten und/oder andere Daten wie Videodaten, Nutzerdaten, Messdaten etc.).

Obige sowie weitere Vorteile, Merkmale und Anwendungsmöglichkeiten einer Ausführungsform ergeben sich aus der nachfolgenden Beschreibung von bevorzugten Ausführungsbeispielen anhand von wenigsten teilweise schematischen Figuren.

### KURZE BESCHREIBUNG DER FIGUREN

In Figur 1 ist ein Knoten eines Netzwerkes gemäß einer Ausführungsform schematisch dargestellt, welcher zur Verarbeitung von Messdaten eingerichtet ist.
In Figur 2 ist eine Blockchain gemäß einer Ausführungsform schematisch dargestellt, für welche ein hierin offenbarter Knoten einen Datenblock erstellen kann.
In Figur 3 ist ein Netzwerk mit einer Vielzahl an Knoten für einen Datenaustausch gemäß einer Ausführungsform dargestellt.
In Figur 4 ist ein Flussdiagramm eines Verfahrens zum Verarbeiten von Messdaten gemäß einer Ausführungsform dargestellt.
In Figur 5 ist ein Flussdiagramm eines Verfahrens zum Überwachen der Verarbeitung eines Industrieprodukts durch eine Vielzahl von Knoten eines Netzwerkes und mittels einer Blockchain gemäß einer Ausführungsform dargestellt.

### DETAILLIERTE BESCHREIBUNG VON AUSFÜHRUNGSFORMEN

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

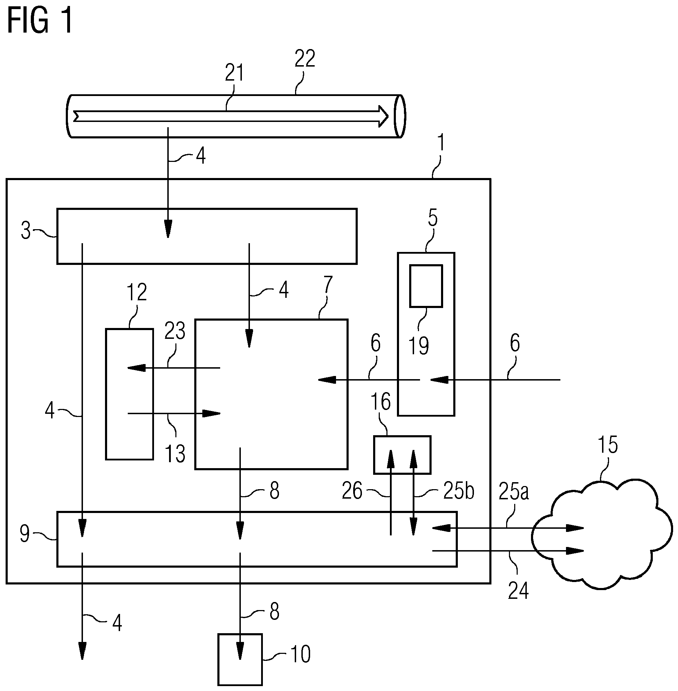

In Figur 1 ist ein Knoten 1 eines Netzwerkes 2 gemäß einer Ausführungsform schematisch dargestellt, welcher zur Verarbeitung von Messdaten 4 eingerichtet ist. Dabei kann der Knoten 1 in der Umgebung eines Transportsystems 21 angeordnet sein, welches zum Transport einer transportablen Substanz 22 eingerichtet ist. Beispielsweise kann als transportable Substanz 22 mindestens eines von Erdöl, Erdgas, Wasser, Abwasser und Strom vorgesehen sein.

Der Knoten gemäß Figur 1 kann dabei eine Messeinrichtung 3 aufweisen, welche zum Erfassen von Messdaten 4, welche mindestens eine physikalische Größe abbilden, eingerichtet ist. Ferner können sich die Messdaten 4 auf eine Menge und/oder eine Güte einer in dem Transportsystem 21 transportablen Substanz 22 beziehen.

Der Knoten 1 kann ferner eine Empfangseinrichtung 5 aufweisen, welche zum Empfangen einer Blockchain 6 eingerichtet ist.

Der Knoten 1 kann ferner eine Erstellungseinrichtung 7 aufweisen, welche zum Erstellen eines Datenblocks 8 für die Blockchain 6 basierend auf den Messdaten 4 und der Blockchain 6 eingerichtet ist. Dabei kann der Datenblock 8 eine Prüfsumme der Messdaten 11 umfassen. Ferner kann der Datenblock 8 die Messdaten 4 nicht umfassen. Dabei kann die Erstellungseinrichtung 7 in Verbindung mit einer Statusabfrageeinrichtung 12 des Knotens 1 stehen und eine Statusanfrage 23 an die Statusabfrageeinrichtung ausgeben. Die Statusabfrageeinrichtung 12 kann zum Bestimmen von Statusdaten 13, die einen Betriebsparameter der Messeinrichtung 3 betreffen, eingerichtet sein, wobei der durch die Erstellungseinrichtung 7 erstellte Datenblock 8 ferner auf den Statusdaten 13 basiert.

Gemäß einer Ausführungsform des Knotens 1 gemäß Figur 1 kann ferner vorgesehen sein, dass die Messeinrichtung 3 zum zeitsequenzielle Erfassen der Messdaten 4 und zum Aggregieren der Messdaten 4 im Zusammenhang mit dem Erstellen des Datenblocks 8 eingerichtet ist.

Der Knoten 1 kann ferner eine Ausgabeeinrichtung 9 aufweisen, welche zum getrennten Ausgeben (i) des Datenblocks 8 zur Validierung durch einen weiteren Knoten 10a-10c und (ii) der Messdaten 4 eingerichtet ist. Dabei kann der weitere Knoten 10a-10c als zentraler Knoten 14 ausgebildet sein. Die Ausgabeeinrichtung 9 kann dabei dazu eingerichtet sein, den Datenblock 8 und die Messdaten 4 an unterschiedliche weitere Konten 10a-10c innerhalb des Netzwerkes 2 zu übertragen.

Die Ausgabeeinrichtung kann ferner mit einem außerhalb des Knotens 1 angeordneten Speicher 15 in Verbindung stehen. Die Ausgabeeinrichtung kann dabei dazu eingerichtet sein, den Datenblock 8 an den Speicher 15 mittels einer Speicherinstruktion 24 auszugeben und den in dem Speicher 15 gespeicherten Datenblock 8 über eine Ladeinstruktion 25a rückzugewinnen. Der Speicher 15 kann dabei ein lokaler Speicher oder ein Cloudspeicher sein.

Für Fälle, in denen die Verbindung zwischen dem Knoten 1 und dem Speicher 15 vorübergehend unterbrochen oder nicht betriebsbereit sein kann, kann der Knoten 1 ferner eine Zwischenspeichereinrichtung 16 aufweisen, welche dazu eingerichtet ist, den Datenblock 8 vorübergehend mittels einer Zwischenspeicherinstruktion 26 zu speichern, bis das Übertragen durch die Ausgabeeinrichtung 9 an den Speicher ermöglicht werden kann. Der in dem Zwischenspeicher 16 zwischengespeicherten Datenblock 8 kann über eine Ladeinstruktion 25b rückgewonnen werden.

Gemäß einer weiteren, in Figur 1 nicht vollständig dargestellten Ausführungsform kann die Empfangseinrichtung 5 ferner dazu eingerichtet sein, einen weiteren Datenblock 29a-29c von einem weiteren Knoten 10a-10c des Netzwerks 2 zur Verarbeitung von weiteren Messdaten 17a-17c einer weiteren Messeinrichtung 18-18c zu empfangen, wobei der Knoten ein Validierungsmodul 19 umfasst, dass dazu eingerichtet ist, den weiteren Datenblock 29a-29c basierend auf einem Vergleich mit einer Prüfsumme 20a-20b des weiteren Datenblocks 29a-29c mit der Blockchain zu validieren und in Abhängigkeit von einem Validierungsergebnis den weiteren Datenblock 29a-29c mit der Blockchain 6 zu verketten.

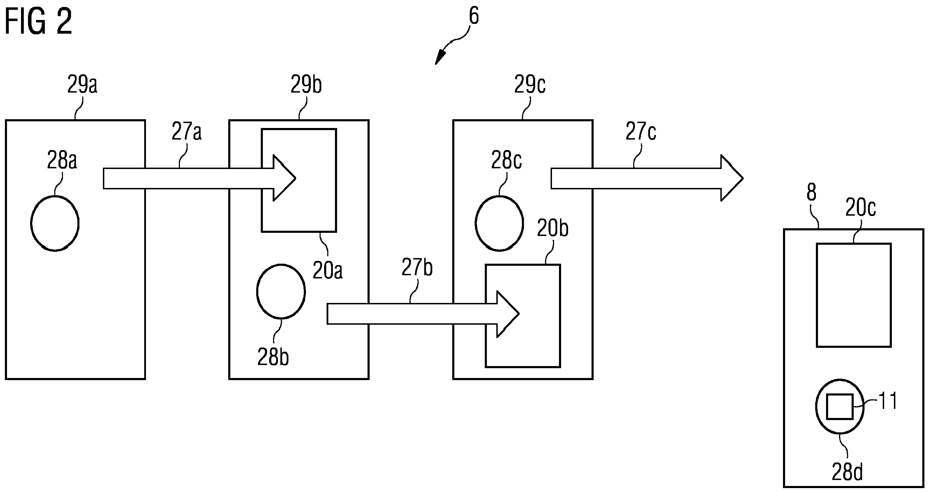

In Figur 2 ist eine Blockchain 6 gemäß einer Ausführungsform schematisch dargestellt, für welche ein Knoten 1 gemäß Figur 1 einen Datenblock 8 erstellen kann. Die Blockchain 6 kann dabei eine Vielzahl an Datenblöcken 29a-29c aufweisen, welche zur Verkettung der Datenblöcke die Verkettungsmittel 27a-27c vorsehen. Dabei kann jeder der hinterlegten weiteren Datenblöcke 29a-29c der Blockchain 6 indikativ für weitere Messdaten 17a-17c von weiteren Messeinrichtungen 18 von weiteren Knoten 10a-10c des Netzwerks 2 sein. Derartige Indikationen können gemäß der Blockchain 6 aus Figur 2 beispielsweise in den Transaktionen 28a-28c hinterlegt sein. In gleicher Weise kann die Prüfsumme der Messdaten 11 in einer Transaktion 28d des mittels der Erstellungseinrichtung 7 erstellten Datenblocks 8 hinterlegt sein. Jeder der Datenblöcke 29a-29c, 8 kann ferner eine Prüfsumme 20a-20c aufweisen, welche auf den Daten der vorhergehenden Datenblöcken 29a-29c basiert.

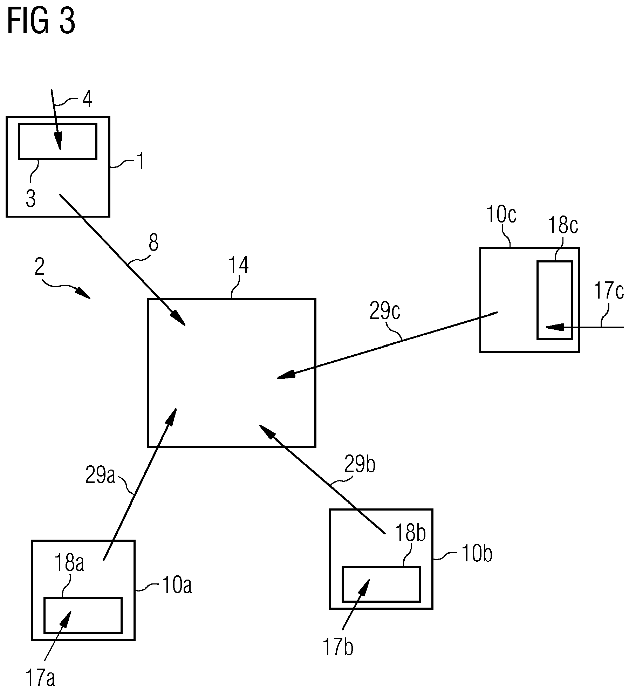

In Figur 3 ist ein Netzwerk 2 mit einer Vielzahl an Knoten 1, 10a-10c für einen Datenaustausch gemäß einer Ausführungsform dargestellt. Dabei kann jeder Knoten 1 Messdaten 4, 17a-17c mittels einer Messeinrichtung 3, 18a-18c empfangen und hierauf basierend ausgebbare Datenblöcke 8, 29a-29c erstellen. Gemäß der in Figur 3 dargestellten Ausführungsform werden alle in dem Netzwerk 2 erstellten Datenblöcke 8, 29a-29c an einen zentralen Knoten 14 zur Validierung für die Blockchain 6 ausgegeben. Gemäß dieser Ausführungsform kann der zentrale Knoten 14 als zentrale Autorität ausgebildet sein. Es sei jedoch darauf hingewiesen, dass gemäß anderen Ausführungsformen auch dezentrale Validierungen der erstellten Datenblöcke 8, 29a-29c vorgesehen sein können. Beispielsweise kann gemäß anderen Ausführungsformen der Datenblock 8 auch durch einen der weiteren Knoten 10a-10c validiert werden. Dies kann in gleicher Weise auch für die Datenblöcke 29a-29c vorgesehen sein.

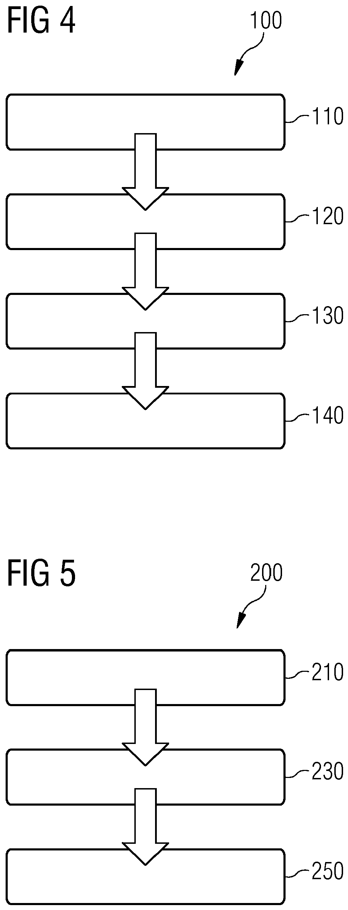

In Figur 4 ist ein Flussdiagramm eines Verfahrens 10 zum Verarbeiten von Messdaten 4 gemäß einer Ausführungsform dargestellt.

Bei 110 kann das Verfahren 100 dabei ein Erfassen der Messdaten 4, welche mindestens eine physikalische Größe abbilden, vorsehen.

Bei 120 kann das Verfahren 100 dabei ein Empfangen der Blockchain 6 vorsehen.

Bei 130 kann das Verfahren 100 dabei ein Erstellen eines Datenblocks 8 für die Blockchain 6 basierend auf den Messdaten 4 und der Blockchain 6 vorsehen.

Bei 140 kann das Verfahren dabei ein getrenntes Ausgeben 140 (i) des Datenblocks 8 zur Validierung und (ii) der Messdaten 4 vorsehen.

Gemäß einigen Ausführungsformen kann das Verfahren 100 dabei mit einem Knoten 1 gemäß einer der hierin dargestellten Ausführungsformen ausgeführt werden.

In Figur 5 ist ein Flussdiagramm eines Verfahrens 200 zum Überwachen der Verarbeitung eines Industrieprodukts durch eine Vielzahl von Knoten 1, 10a-10c eines Netzwerkes 2 und mittels einer Blockchain 6 gemäß einer Ausführungsform dargestellt.

Bei 210 kann dabei ein Erfassen von entsprechenden Messdaten 4, 17a-17c, welche die Verarbeitung des Industrieprodukts mit einer entsprechenden Messmodalität abbilden, an jedem der Knoten 1, 10a-10c ausgeführt werden.

Bei 230 kann ein Erstellen 230 eines entsprechenden Datenblocks 8, 29a-29c für die Blockchain 6 basierend auf der Blockchain 6 und den entsprechenden Messdaten 4, 17a-17c an jedem der Knoten 1, 10a-10c der Vielzahl von Knoten 1, 10a-10c ausgeführt werden.

Bei 250 kann ein Validieren 250 des durch einen ersten Knoten 1, 10a-10c der Vielzahl von Knoten 1, 10a-10c erstellten Datenblocks 8, 29a-29c durch einen zweiten Knoten 1, 10a-10c der Vielzahl von Knoten 1, 10a-10c und/oder durch einen zentralen Knoten 14 des Netzwerks 2 ausgeführt werden.

Gemäß einigen Ausführungsformen des Verfahrens 200 können ferner unterschiedliche Knoten 1, 10a-10c der Vielzahl von Knoten 1, 10a-10c die Verarbeitung des Industrieprodukts mit unterschiedlichen Messmodalitäten und/oder zu unterschiedlichen Zeiten und/oder an unterschiedlichen Positionen abbilden.

Gemäß einiger weiterer hierin nicht dargestellter Ausführungsformen sind die Prüfsummen als Hash-Werte ausgebildet, aus welchen sich ein Hashwert-Baum erstellen lässt, welcher die Informationen aller Messwerte beinhaltet. Der Hashwert-Baum kann dann der zentralen Einheit übertragen Werten. Gemäß weiterer Ausführungsformen werden erfolgen Datenübertragungen innerhalb des Knotens 1 mindestens teilweise verschlüsselt.

Gemäß einigen weiteren Ausführungsformen können ferner Daten, die beispielsweise in einer Transaktion eines Datenblocks gespeichert werden, insbesondere auf unterschiedliche Weise bereitgestellt werden. Anstelle der Daten, z. B. Nutzerdaten wie Messdaten oder Daten/Eigentumsverhältnisse zu Assets, kann beispielsweise eine Transaktion eines Datenblocks nur die Prüfsumme für diese Daten umfassen. Die entsprechende Prüfsumme kann dabei auf unterschiedliche Weise realisiert werden. Dies kann z. B. eine entsprechende Datenblockprüfsumme eines Datenblocks (mit den entsprechenden Daten) einer anderen Datenbank oder des verteilten Datenbanksystems sein, eine Transaktionsprüfsumme eines Datenblocks mit den entsprechenden Daten (des verteilten Datenbanksystems oder einer anderen Datenbank) oder eine Datenprüfsumme, die über die Daten gebildet wurde. Zusätzlich kann die entsprechende Transaktion noch einen Verweis oder eine Angabe zu einem Speicherort (z. B. eine Adresse eines Fileservers und Angaben, wo die entsprechenden Daten auf dem Fileserver zu finden sind; oder eine Adresse einer anderen verteilten Datenbank, welche die Daten umfasst) umfassen. Die entsprechenden Daten könnten dann beispielsweise auch in einer weiteren Transaktion eines weiteren Datenblocks des verteilten Datenbanksystems bereitgestellt werden (z. B. wenn die entsprechenden Daten und die zugehörigen Prüfsummen in unterschiedlichen Datenblöcken umfasst sind). Es ist beispielsweise aber auch denkbar, dass diese Daten über einen anderen Kommunikationskanal (z. B. über eine andere Datenbank und/oder einen kryptographisch gesicherten Kommunikationskanal) bereitgestellt werden.

Auch kann beispielsweise zusätzlich zu der Prüfsumme ein Zusatzdatensatz (z. B. ein Verweis oder eine Angabe zu einem Speicherort) in den entsprechenden Transaktionen abgelegt sein, der insbesondere einen Speicherort angibt, wo die Daten abgerufen werden können. Das ist insbesondere dahingehend vorteilhaft, um eine Datengröße der Blockkette oder des verteilten Datenbanksystems möglichst gering zu halten.

## Patentansprüche

1. Knoten (1) eines Netzwerkes (2), aufweisend:
eine Messeinrichtung (3), eingerichtet zum Erfassen von Messdaten (4), welche mindestens eine physikalische Größe abbilden,
eine Empfangseinrichtung (5), eingerichtet zum Empfangen einer Blockchain (6),
eine Erstellungseinrichtung (7), eingerichtet zum Erstellen eines Datenblocks (8) für die Blockchain (6), basierend auf den Messdaten (4) und der Blockchain (6), und
eine Ausgabeeinrichtung (9), eingerichtet zum getrennten Ausgeben (i) des Datenblocks (8) zur Validierung durch einen weiteren Knoten (10a-10c) und (ii) der Messdaten (4).

2. Knoten (1) nach Anspruch 1, wobei der Datenblock (8) eine Prüfsumme der Messdaten (11) umfasst.

3. Knoten (1) nach Anspruch 1 oder 2, wobei der Datenblock (8) die Messdaten (4) nicht umfasst.

4. Knoten (1) nach einem der vorhergehenden Ansprüche, wobei die Messeinrichtung (3) zum zeitsequentiellen Erfassen der Messdaten (4) und zum Aggregieren der Messdaten (4) im Zusammenhang mit dem Erstellen des Datenblocks (8) eingerichtet ist.

5. Knoten (1) nach einem der vorhergehenden Ansprüche, ferner aufweisend eine Statusabfrageeinrichtung (12), eingerichtet zum Bestimmen von Statusdaten (13), die einen Betriebsparameter der Messeinrichtung (3) betreffen, wobei der durch die Erstellungseinrichtung (7) erstellte Datenblock (8) ferner auf den Statusdaten (13) basiert.

6. Knoten (1) nach einem der vorhergehenden Ansprüche, wobei die Ausgabeeinrichtung (9) dazu eingerichtet ist, den Datenblock (8) zur Validierung an einen zentralen Knoten (14) des Netzwerkes (2) auszugeben.

7. Knoten (1) nach einem der vorhergehenden Ansprüche, wobei die Ausgabeeinrichtung (9) dazu eingerichtet ist, den Datenblock (8) an einen Speicher (15) auszugeben, wobei der Speicher (15) ein lokaler Speicher oder ein Cloudspeicher ist.

8. Knoten (1) nach Anspruch 7, ferner aufweisend eine Zwischenspeichereinrichtung (16), welche dazu eingerichtet ist den Datenblock (8) vorübergehend zu speichern, bis das Übertragen durch die Ausgabeeinrichtung (9) an den Speicher (15) ermöglicht werden kann.

9. Knoten (1) nach einem der vorhergehenden Ansprüche, wobei die Blockchain (6) eine Vielzahl von hinterlegten weiteren Datenblöcken (29a-29c) aufweist, wobei die hinterlegten weiteren Datenblöcke (29a-29c) indikativ für weitere Messdaten (17a-17c) von weiteren Messeinrichtungen (18) von weiteren Knoten (10a-10c) des Netzwerks (2) sind.

10. Knoten (1) nach einem der vorhergehenden Ansprüche, wobei die Ausgabeeinrichtung (9) dazu eingerichtet ist, den Datenblock (8) und die Messdaten (4) an unterschiedliche weitere Knoten (10a-10c) innerhalb des Netzwerks (2) zu übertragen.

11. Knoten (1) nach einem der vorhergehenden Ansprüche, wobei die Empfangseinrichtung (5) ferner dazu eingerichtet ist, einen weiteren Datenblock (29a-29c) von einem weiteren Knoten (10a-10c) des Netzwerks (2) zur Verarbeitung von weiteren Messdaten (17a-17c) einer weiteren Messeinrichtung (18a-18c) zu empfangen, wobei der Knoten (1) weiterhin umfasst:
ein Validierungsmodul (19), das eingerichtet ist, den weiteren Datenblock (29a-29c) basierend auf einem Vergleich einer Prüfsumme (20a-20b) des weiteren Datenblocks (29a-29c) mit der Blockchain (6) zu validieren und in Abhängigkeit von einem Validierungsergebnis den weiteren Datenblock (29a-29c) mit der Blockchain (6) zu verketten.

12. Knoten (1) nach einem der vorhergehenden Ansprüche, wobei sich die Messdaten (4) auf eine Menge und/oder eine Güte einer in einem Transportsystem (21) transportablen Substanz (22) beziehen.

13. Verfahren (100) zum Verarbeiten von Messdaten (4), aufweisend:
Erfassen (110) der Messdaten (4), welche mindestens eine physikalische Größe abbilden,
Empfangen (120) einer Blockchain (6),
Erstellen (130) eines Datenblocks (8) für die Blockchain (6) basierend auf den Messdaten (4) und der Blockchain (6), und
Getrenntes Ausgeben (140) (i) des Datenblocks (8) zur Validierung und (ii) der Messdaten (4).

14. Verfahren (100) nach Anspruch 13, welches mit einem Knoten (1) gemäß einem der Ansprüche 2-12 ausgeführt wird.

15. Verfahren (200) zum Überwachen der Verarbeitung eines Industrieprodukts durch eine Vielzahl von Knoten (1, 10a-10c) eines Netzwerks (2) und mittels einer Blockchain (6), das Verfahren (200) aufweisend:
an jedem der Knoten (1, 10a-10c) der Vielzahl von Knoten (1, 10a-10c): Erfassen (210) von entsprechenden Messdaten (4, 17a-17c), welche die Verarbeitung des Industrieprodukts mit einer entsprechenden Messmodalität abbilden,
an jedem der Knoten (1, 10a-10c) der Vielzahl von Knoten (1, 10a-10c): Erstellen (230) eines entsprechenden Datenblocks (8, 29a-29c) für die Blockchain (6) basierend auf der Blockchain (6) und den entsprechenden Messdaten (4, 17a-17c),
Validieren (250) des durch einen ersten Knoten (1, 10a-10c) der Vielzahl von Knoten (1, 10a-10c) erstellten Datenblocks (8, 29a-29c) durch einen zweiten Knoten (1, 10a-10c) der Vielzahl von Knoten (1, 10a-10c) und/oder durch einen zentralen Knoten (14) des Netzwerks (2).

16. Verfahren (200) nach Anspruch 15, wobei unterschiedliche Knoten (1, 10a-10c) der Vielzahl von Knoten (1, 10a-10c) die Verarbeitung des Industrieprodukts mit unterschiedlichen Messmodalitäten und/oder zu unterschiedlichen Zeiten und/oder an unterschiedlichen Positionen abbilden.
